# EUROPÄISCHE PATENTSCHRIFT

(11) **EP 2 258 568 B1**
(45) Veröffentlichungstag und Bekanntmachung des Hinweises auf die Patenterteilung: **14.05.2014**
(21) Anmeldenummer: 10004510.3
(22) Anmeldetag: 29.04.2010
(51) Int. Cl.: B60D 5/00, B61D 17/22, B62D 47/02, B64F 1/30

(54) **Balg zwischen zwei gelenkig miteinander verbundenen Fahrzeugen oder Balg einer Fluggasttreppe oder -brücke**
Bellows for the intersection of two vehicles with a jointed connection or bellows for an air passenger boarding bridge or steps
Soufflet entre deux véhicules reliés de manière articulée ou soufflet de passerelle

(30) Priorität: 04.06.2009 DE 102009023823
(43) Veröffentlichungstag der Anmeldung: 08.12.2010
(73) Patentinhaber: Hübner GmbH & Co. KG, 34123 Kassel (DE)
(72) Erfinder: Bartelmai, Carmen, 34308 Bad Emstal (DE); Bittroff, Uwe, 34246 Vellmar (DE)
(74) Vertreter: Walther, Walther & Hinz GbR

(56) Entgegenhaltungen:
- EP-A1- 0 389 934
- EP-A1- 1 688 278
- WO-A1-2008/101467
- DE-A1- 19 827 696
- DE-B3- 10 246 236
- FR-A1- 2 751 291
- US-A1- 2004 250 457

## Beschreibung

Die vorliegende Erfindung betrifft einen Balg zwischen zwei gelenkig miteinander verbundenen Fahrzeugen oder Balg einer Fluggasttreppe oder -brücke, der ein mit Kunststoff beschichtetes Gewebe aufweist.

Bälge als Teil eines Übergangs zwischen gelenkig miteinander verbundenen Fahrzeugen, z. B. Schienenfahrzeugen oder Gelenkbussen, sind hinreichend bekannt. Ebenfalls sind Bälge bei Fluggasttreppen oder Fluggastbrücken bekannt. Solche Bälge bestehen aus einem mit Kunststoff beschichteten Gewebe, beispielsweise einem mit Silikon, PVC oder EPDM beschichteten Gewebe. Derartige Gewebe sind hoch reißfest, allerdings von hoher Verformbarkeit. Dies ist insofern erforderlich, als beispielsweise bei Gelenkfahrzeugen ein solcher Balg in der Lage sein muss, den unterschiedlichsten Fahrbewegungen, wie Nick-, Wank- und Knickbewegungen bzw. überlagerten Bewegungsarten hieraus nachgeben zu können. Aus der EP 0389934 ist in diesem Zusammenhang ein Polgewebe bekannt, das mit einer Kunststoffbahn beschichtet ist. Die Verwendung eines solchen beschichteten Polgewebes zur Herstellung eines Balges beschreibt diese Literaturstelle ebenfalls. Derartige Bälge sind üblicherweise einfarbig ausgebildet.

Aus der DE 102 46 236 B3 ist bekannt, auf einen Balg, der ein mit Kunststoff beschichtetes Gewebe aufweist, eine Antihaft-Folie aufzubringen.

Insbesondere von den Verkehrsbetrieben wurde das Ansinnen geäußert, einen solchen Balg mit Werbung versehen zu können. Bekannt ist, dass insbesondere im öffentlichen Nahverkehr die dort eingesetzten Fahrzeuge als Werbeträger fungieren. Häufig sind die Fahrzeuge mit Folien beklebt oder auch entsprechend lackiert.

Bislang ist man davon ausgegangen, dass Folien auf Bälgen dauerhaft nicht halten. Begründet wurde dies damit, dass die Folien, genau wie der Balg, einer andauernden Bewegung unterworfen werden, wobei man insbesondere davon ausgegangen ist, dass die Klebeverbindung zwischen Balg und Folie einer solchen dauerhaften Biegebeanspruchung nicht gewachsen ist. Darüber hinaus hatte man durchaus auch Zweifel, ob die Folie selbst eine solche dauerhafte Biegebelastung Stand halten würde.

Es hat sich nun überraschenderweise herausgestellt, dass die Folie eines mit einer solchen Folie beklebten Balges, insbesondere mit einer bedruckten Folie beklebten Balges, durchaus über einen langen Zeitraum hinweg ohne optische Veränderungen auf dem Balg haften bleibt.

Dies gilt insbesondere dann, wenn auf den Balg, der durch eine Mehrzahl von Balgrahmen in Balgsegmente unterteilt ist, die Folie auf den einzelnen Balgsegmenten aufgeklebt ist. Das heißt, dass die Folie bei einem Faltenbalg nicht die Balgrahmen erfasst, sondern lediglich die zwischen den einzelnen Balgrahmen befindlichen eigentlichen Balgsegmente. Die Balgrahmen, die die Falten eines solchen Faltenbalges umfangsseitig erfassen, stehen über das eigentliche Material, nämlich die mit Kunststoff beschichtete Gewebebahn, über. Das heißt, dass sich im Extremfall, also beispielsweise bei einer engen Kurve, die Balgrahmen eines Faltenbalges zwar berühren, nicht aber die Folie, die auf den Balgsegmenten aufgeklebt ist, in irgendeiner Weise auf Reibung beansprucht würde. Das heißt, durch die Balgrahmen bei einem Faltenbalg wird die Folie quasi geschützt.

Im Einzelnen ist vorgesehen, dass die Folie als PVC-Folie ausgebildet ist, wobei zum Verkleben der Folie auf dem kunststoffbeschichteten Gewebe ein Polyacrylat eingesetzt wird. Die Folie, die insbesondere als Digitaldruckfolie ausgebildet ist, ist des Weiteren UV beständig und Schmutz abweisend.

Anhand der Zeichnungen wird die Erfindung nachstehend beispielhaft näher erläutert.
- Figur 1: zeigt schematisch zwei Fahrzeuge, die durch einen Übergang mit einem Balg verbunden sind;
- Figur 2: zeigt einen Ausschnitt aus einem Faltbalg im Schnitt;
- Figur 3: zeigt einen Ausschnitt aus einem Wellenbalg im Schnitt.

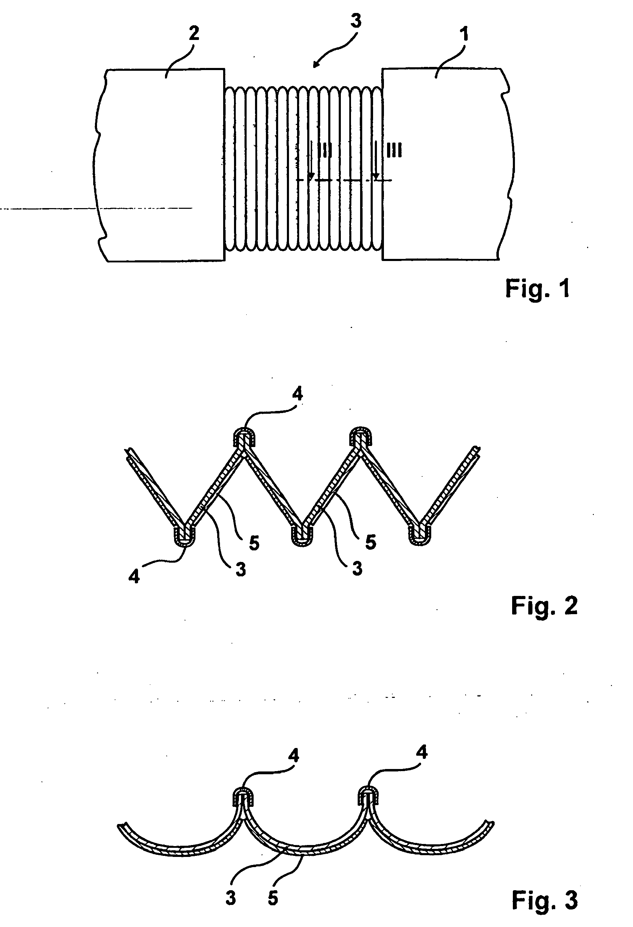

Zwischen den Fahrzeugen 1 und 2 befindet sich der Balg 3 als Teil eines Übergangs. Der Balg 3 umfasst eine mit Kunststoff beschichtete Stoffbahn, wobei der Balg, wenn er als Falten- bzw. Wellenbalg ausgebildet ist, durch Balgrahmen 4 im Bereich des Übergangs von einer Falte zur nächsten bzw. einer Welle zur nächsten eingefasst ist (Fig. 2, Fig. 3). Die einzelnen Balgsegmente bei einem Falten- oder Wellenbalg, die sich durch die Teilung des Balges durch die Balgrahmen ergeben, sind mit einer Folie 5, insbesondere einer bedruckten Folie, z. B. zu Werbezwecken, beklebt. Die Folie erfasst hierbei nicht die Balgrahmen 4, sondern - wie bereits ausgeführt - nur die Balgsegmente, also den Teil des Balges, der sich zwischen zwei Balgrahmen befindet.

Die Balgrahmen 4 stehen bei einem Faltenbalg, da sie eine gewisse seitliche Erstreckung aufweisen, über das Material des eigentlichen Faltenbalges vor, wie sich dies unmittelbar in Anschauung von Figur 2 ergibt. Das heißt, selbst wenn der Faltenbalg zusammengeschoben wird, erfolgt - wenn überhaupt - nur eine kurzfristige Berührung des mit Kunststoff beschichteten Gewebes aufeinander. Insofern wird die auf dem kunststoffbeschichteten Gewebe aufgeklebte Folie 5 durch die Balgrahmen 4 bei einem Faltenbalg vor Abrieb weitestgehend geschützt.

## Patentansprüche

1. Balg zwischen zwei gelenkig miteinander verbundenen Fahrzeugen oder Balg einer Fluggasttreppe oder -brücke, wobei der Balg ein mit Kunststoff beschichtetes Gewebe aufweist,
**dadurch gekennzeichnet,**
**dass** der Balg (3) durch eine Mehrzahl von Balgrahmen (4) in Balgsegmente unterteilt ist, wobei eine zusätzliche Folie (5), insbesondere eine bedruckte Folie (5) auf den Balgsegmenten aufgeklebt ist.

2. Balg nach einem der voranstehenden Ansprüche,
**dadurch gekennzeichnet,**
**dass** die Folie (5) eine PVC-Folie ist.

3. Balg nach einem der vorangehenden Ansprüche,
**dadurch gekennzeichnet,**
**dass** zum Verkleben der Folie (5) auf dem kunststoffbeschichteten Gewebe des Balges (3) ein Polyacrylatkleber vorgesehen ist.

4. Balg nach einem der vorangehenden Ansprüche,
**dadurch gekennzeichnet,**
**dass** die Folie (5) eine Digitaldruckfolie ist.

## Claims

1. A bellows between two articulately connected vehicles or a bellows of a gangway or passenger boarding bridge, the bellows having a plastic-coated fabric,
**characterized in that**
the bellows (3) is divided into bellows segments by a plurality of bellows frames (4), an additional film (5), more specifically a printed film (5) being glued onto the bellows segments.

2. The bellows according to one of the afore-mentioned claims,
**characterized in that**
the film (5) is a PVC film.

3. The bellows according to one of the afore-mentioned claims,
**characterized in that**
a polyacrylate adhesive is provided for gluing the foil (5) onto the plastic-coated fabric of the bellows (3).

4. The bellows according to one of the afore-mentioned claims,
**characterized in that**
the film (5) is a digital printing film.

## Revendications

1. Soufflet disposé entre deux véhicules articulés couplés entre eux ou soufflet pour escalier d'accès passagers à un avion ou d'un pont d'accès passagers à un avion, dans lequel le soufflet est revêtu d'un tissu en matière synthétique,
**caractérisé en ce que**,
le soufflet (3) est constitué d'une pluralité de segments de soufflet séparés par des armatures de soufflet (4), dans lequel un film (5) complémentaire, en particulier un film (5) imprimé est collé sur les segments de soufflet.

2. Soufflet selon la revendication 1,
**caractérisé en ce que**,
le film (5) est un film en PVC.

3. Soufflet selon l'une des revendications précédentes,
**caractérisé en ce que**,
il est prévu d'utiliser une colle en polyacrylate pour coller le film (5) sur le tissu revêtu d'une matière synthétique du soufflet (3).

4. Soufflet selon l'une des revendications précédentes,
**caractérisé en ce que**,
le film (5) est un film d'impression numérique.
